# EUROPEAN PATENT APPLICATION

(11) **EP 4 717 635 A1**
(43) Date of publication of application: **01.04.2026**
(21) Application number: 24207832.7
(22) Date of filing: 21.10.2024
(51) Int. Cl.: B65G 27/08, B65G 27/26, B65G 27/20, B65G 27/24, B65G 27/28

(54) **VIBRATING CONVEYOR**

(30) Priority: 25.09.2024 PL 44989124
(71) Applicant: Akademia Gorniczo-Hutnicza im. Stanislawa Staszica w Krakowie, 30-059 Krakow (PL)
(72) Inventor: Czubak, Piotr, 30-150 Kraków (PL)
(74) Representative: Kuczynska, Teresa

(57) **Abstract**

The object of the present invention is a vibrating conveyor (1) comprising: a base body (2); a vibration drive (3) mounted on the base body (2); a trough (5) for conveying material (6), mounted on the base body (2) by means of a suspension system (7) comprising suspension sub-assemblies (7a); and a basic suspension (8) for mounting the vibrating conveyor on a ground (12) and connected to the base body (2). The vibrating conveyor (1) defines a direction η which is parallel to the direction of extension of the suspension sub-assemblies (7a) between the base body (2) and the trough (5), and a direction ξ which is the direction of the main working vibrations of the trough (5) and which is perpendicular to the direction η. The vibrating conveyor (1) includes at least one resilient buffer (9) attached to one of the base body (2) and the trough (5), wherein between the at least one resilient buffer (9) and the other of the base body (2) and the trough (5) there is a gap (10) extending in the direction ξ. The rigidity of the basic suspension (8) in the direction η is greater than the rigidity of the basic suspension (8) in the direction ξ.

## Description

An object of the present invention is a vibrating conveyor, in particular a dual-mass conveyor with the possibility of using even only one vibration drive and dosing a material with a negligible impact on the environment/ ground, for transporting bulk materials.

Various types of vibrating conveyors are known from the following documents PL 242866 B1, US3053379A, EP2998245A1, CN109649965B or US8733540B2.

In particular, a vibration isolation conveyor comprising an eliminator, a vibration drive, a trough, an adjuster, spring strips and coil springs is known from PL 242866 B1. The eliminator is fixed to the frame by means of a plurality of spring strips, while the vibration drive is fixed to the eliminator. The coil springs are connected to the trough and are used to seat the vibrating conveyor on the ground. A controller is connected to the vibration drive in order to regulate the speed.

The state-of-the-art solutions have the following problems:
- considerable forces are transmitted to the ground,
- due to the high forces transmitted to the ground, the suspension of such vibrating conveyors can fail quite quickly,
- large, energy-intensive and expensive vibration drives are required,
- when the weight of the material to be conveyed increases, the conveying speed is reduced,
- two vibration drives are often used to achieve material conveying, which complicates the design of the vibrating conveyor and increases its cost.

The aim of the present invention is to develop a vibrating conveyor which would be a resonant vibration-isolated conveyor, i.e. one which operates in one of its resonance zones and in which the forces transmitted to the ground would be considerably reduced - smaller than for conventional conveyors with the same parameters.

Another aim of the present invention is to develop a vibrating conveyor in which the speed of material transport would be independent of the material itself.

Still another aim of the invention is to develop a vibrating conveyor of simpler design, in which small and therefore low-cost vibration drives can be used.

A vibrating conveyor comprising: a base body; a vibration drive mounted on the base body; a trough for conveying material, mounted on the base body by means of a suspension system comprising suspension sub-assemblies; and a basic suspension for mounting the vibrating conveyor on the ground and connected to the base body; according to the invention is characterised in that the vibrating conveyor defines a direction η, which is parallel to the direction of extension of the suspension sub-assemblies between the base body and the trough, and a direction ξ, which is the direction of the main working vibrations of the trough and which is perpendicular to the direction η; the vibratory conveyor includes at least one resilient buffer attached to one of the base body and the trough, wherein between the at least one resilient buffer and the other of the base body and the trough there is a gap extending in the ξ direction, and a rigidity of the basic suspension in the direction η is greater than the rigidity of the basic suspension in the direction ξ.

Advantageously, at least one resilient buffer is attached to the base body and a gap is present between the at least one resilient buffer and the trough.

Advantageously, the vibrating conveyor comprises four resilient buffers.

Advantageously, the vibration drive comprises one of an electrofibrator and an electromagnetic exciter, and the vibrating conveyor further comprises a control system for controlling the operation of the vibration drive, connected to the vibration drive and comprising an inverter.

Advantageously, the trough comprises a conveying surface along which the conveyed material is moved, and the angle between the conveying surface and the direction 2, is 27°-30°.

Advantageously, the angle is 27°, and the rigidity of the basic suspension in the direction η is twice the rigidity of the basic suspension in the direction ξ.

By using a basic suspension with different rigidities in two different directions, better isolation of the vibrating conveyor from the ground is achieved and the forces transmitted to the ground are significantly reduced.

In the vibrating conveyor according to the invention, the conveying speed of the material is independent of the weight of the material being conveyed. This is due to the fact that with an increase in the load of the transported material, which with a known conveyor lowers the amplitude, in the present invention on the one hand also lowers the amplitude, but at the same time shifts the zone of second resonance of the conveyor, at which it normally operates, towards lower frequencies, resulting in an increase in the amplitude. This happens as a result of the addition of the mass of the transported material to the conveyor system. With the correct choice of conveyor parameters (mass of the trough, mass of the base body and rigidity of the suspension system between the trough and the base body, independent of the parameters of the basic suspension), it is possible to achieve the effect of maintaining a constant material transport speed regardless of the mass of the material.

A specialist in this field will easily select the above-mentioned conveyor parameters, which will cause the speed of the transported material to be independent of its mass. In practical cases, with the use of similar masses of the trough and the base body and the appropriate selection of the rigidity of the suspensions so that the zone of second resonance is located behind a fixed operating point (in terms of frequency), this occurs spontaneously.

In the vibrating conveyor according to the invention, it is possible to use a small, low-cost and energy-efficient vibration drive whose forcing force will be four times lower (or even 10 times lower) than that resulting from the centre-of-mass movement criterion used in known conveyors not operating in the zone of resonance.

By equipping the vibrating conveyor with a control system, preferably with a frequency converter, it is possible to achieve any conveying speed from a standstill of the conveyed material to the nominal speed.

The advantage of the use of the resilient buffer is the possibility of maintenance-free operation of the vibrating conveyor, which, in the event of an increase in vibrations in the zone of the second resonance (for example, due to overdriving of the vibration drive or damage to any of the elements of the suspension system between the trough and the base body) in which it operates, spontaneously changes its characteristics shifting the zone of the second resonance towards higher frequencies, protecting the conveyor from an uncontrolled increase in the amplitudes of the main masses, i.e. the trough and the base body.

Another advantage of the vibrating conveyor according to the invention is that the material transport speed in its entire range does not depend on the mass of the transported material, which is due to the above-described cooperation of the additional mass of the transported material with the trough, shifting the zone of second resonance towards lower frequencies.

Due to the operation of the vibrating conveyor in the zone of the second resonance in the direction ξ, a relatively small vibration drive can be used, which is inherently cheaper and more energy-efficient than a drive of classical dimensions.

The object of the present invention is depicted in its example of execution in the drawing, in which:
Fig. 1 shows a schematic view of the vibrating conveyor according to the invention,
Fig. 2 depicts the dependence of the amplitude of vibration of the trough and the base body depending on the rotational frequency of the vibration drive,
Fig. 3 shows the dependence of the force transferred to the ground depending on the rotational frequency of the vibration drive, and
Fig. 4 shows the dependence of the vibration amplitude of the trough and the base body on the rotational frequency of the vibration drive in the case of shifting of the zone of the second resonance towards higher frequencies, with the designation of the lines in this diagram (continuous thin line, continuous thick line and dashed line) corresponding to the designation of the same lines from Fig. 2.

The vibrating conveyor 1 according to the present invention comprises a base body 2. A vibration drive 3 such as an electrofibrator or an electromagnetic exciter is mounted on the base body 2. The base body 2 provides a base for mounting the vibration drive 3.

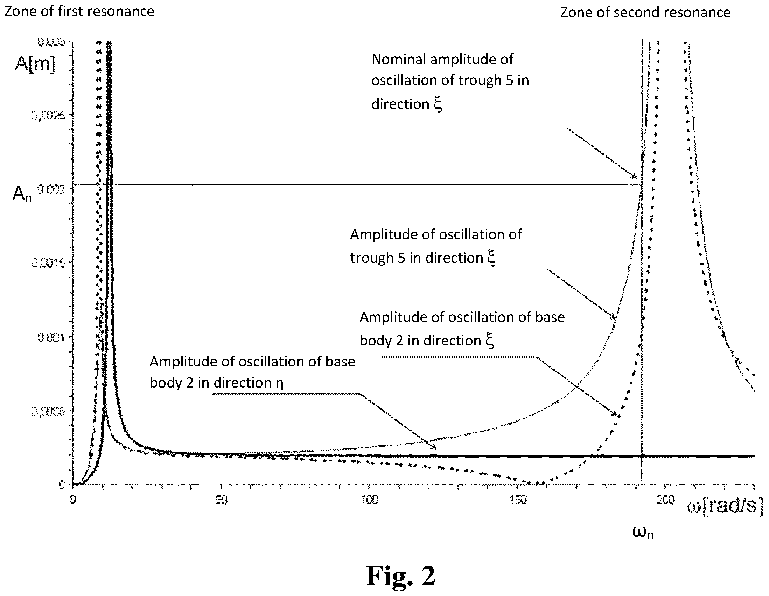

The vibrating conveyor 1 according to the invention is designed to operate in the zone of the second resonance of the amplitude-frequency characteristic. The zone of the second resonance of the vibrating conveyor 1 can be observed in the diagrams of Figs. 2, 3 and 4. Zones of resonance are understood to be areas of the amplitude-frequency characteristics of the vibrating conveyor 1 in which large increases in vibration amplitude occur. The zone of the first resonance corresponds to lower frequencies, while the zone of the second resonance corresponds to higher frequencies.

The vibration drive 3 is connected to a control system 4 for controlling the operation of the vibration drive 3. Depending on the type of vibration drive 3 used, the control system 4 may have an inverter, by means of which, by varying the excitation frequency in a small range, the material conveying speed can be controlled over the full range.

Due to the operation in the zone of the second resonance in the direction ξ, a relatively small vibration drive 3 can be used in the vibrating conveyor 1, which can be determined from the relationship: Maximum forcing force of the vibration drive at the operating point of the vibration drive [kg] = maximum mass of material transported x 2 [kg].

In one embodiment, the vibrating conveyor 1 further comprises a horizontal trough 5 for transporting material 6 along it. Nevertheless, in other embodiments, the trough 5 may be inclined by a certain angle with respect to the horizontal, as required. The trough 5 is mounted on the base body 2 by means of a suspension system 7, i.e. the suspension system 7 is fixed to both the trough 5 and the base body 2. The suspension system 7 may have a plurality of suspension sub-assemblies 7a i.e. sub-assemblies that are connected to the base body 2 and to the trough 5, support the trough 5 on the base body 2 and transmit vibrations from the base body 2 to the trough 5. The suspension sub-assemblies 7a may be spring strips or systems of directional control arms and coil spring.

The vibrating conveyor 1 according to the invention is a double-mass conveyor due to the fact that a trough 5 and a base body 2 are used.

Advantageously, the vibration drive 3 is installed near the common centre of mass for the assembly consisting of the trough 5 and the base body 2. Even more advantageously, the vibration drive 3 is installed at the common centre of mass for the assembly consisting of the trough 5 and the base body 2.

The vibrating conveyor 1 further comprises a basic suspension 8, which is connected to the base body 2 at its bottom or sides and serves to seat the vibrating conveyor 1 on the ground 12. The basic suspension 8 may comprise coil springs or rubber blocks or suspension elements offered by Rosta AG of Switzerland.

The vibrating conveyor 1 has or defines two directions η and ξ, which advantageously intersect at the pivot point of the vibration drive 3. The direction η is parallel to the direction of extension of the suspension sub-assemblies 7a between the base body 2 and the trough 5, i.e. in the longitudinal direction of the suspension sub-assemblies 7a. In other words, the direction η is parallel to the direction defined by the lines connecting the attachment points of the suspension sub-assemblies 7 to the base body 2 and to the trough 5. The direction 2, is perpendicular to the direction η.

With the directions η and 2, defined in this way, the suspension system 7 allows the movement of the trough 5 relative to the base body 2 only in the direction ξ, i.e. the direction 2, is the direction of the main working vibrations of the trough 5 relative to the base body 2 at an angle β to the transport surface 13 of the trough 5, i.e. the surface on which the transported material travels.

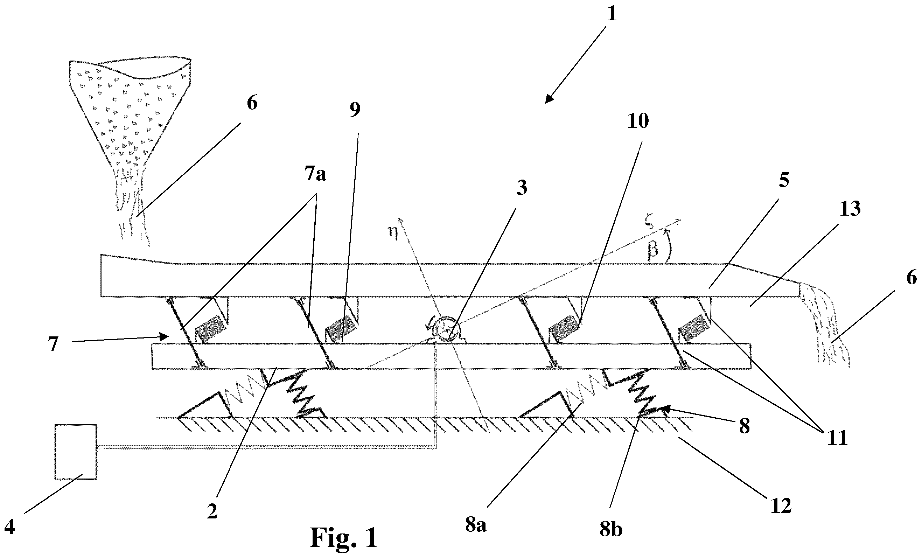

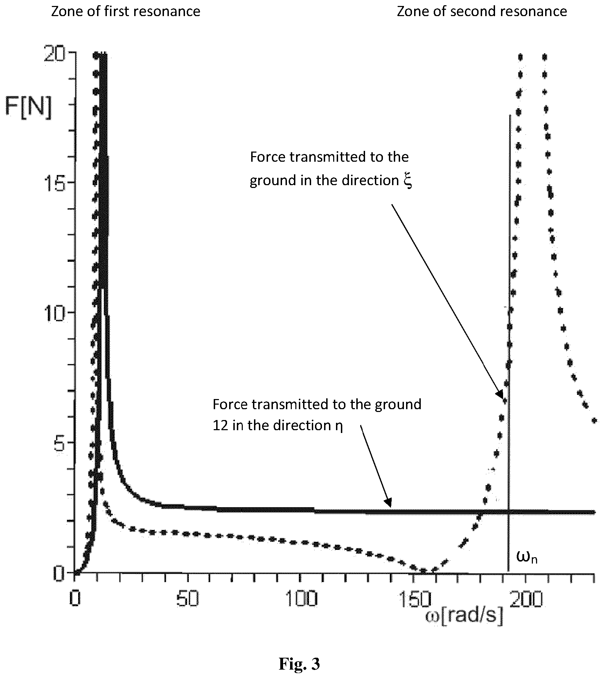

The basic suspension 8 has a rigidity that is different on the direction η and the direction ξ. The rigidity of the basic suspension 8 in the direction η is greater than in the direction 2, (which is represented schematically in figure 1 by the designations 8a - lower rigidity, 8b - higher rigidity) - according to the relation k_{ξ} cosβ=k_{η} sinβ (condition of stability of the vibrating conveyor 1), which results from the distribution of forces originating from the weight of the entire vibrating conveyor 1 together with the transported material. This increases the vibration isolation of the vibrating conveyor 1 with respect to the ground 12 due to the characteristics of the vibrating conveyor 1 in two directions η and ξ, in particular the force-frequency characteristics from Fig. 3.

Through the use of the basic suspension 8 with differentiated rigidity in the two perpendicular directions η and ξ, high vibration isolation of the vibrating conveyor 1 from the ground 12 is achieved, i.e. the vibrations generated by the vibration drive 3 are transmitted to the ground 12 to a small extent. A conveyor of this type, despite working in a similar way to a resonant conveyor, is a conveyor softly suspended on the ground 12, and consequently the forces transmitted to the ground 12 are negligible. In addition, the variation in rigidity of the basic suspension 8 causes that in the direction ξ, in which the base body 2 vibrates more, the basic suspension 8 is less rigid (which is schematically shown as 8a), which further minimises the forces transmitted to the ground 12. In the direction η, vibrations of the base body 2 are much smaller because the enforcement from the vibration drive 3 is relatively small and the excitable mass (i.e. base body 2 and trough 5) is relatively large (in the longitudinal direction of the suspension sub-assemblies 7a, such as the spring strips, the mass of the base body 2 and the mass of trough 5 behave as a single mass) - the vibration in this direction η is relatively small (Fig. 2) which results in the forces transmitted in this direction η despite the stiffer suspension 8b being minimal.

It is advantageous that the angle β is in the range 27°-30°, so that the main static load from the mass of the entire vibrating conveyor 1 including the transported material 6 occurs in the direction η so that in order to ensure the stability of the system of the vibrating conveyor 1, the rigidity in this direction η should be greater. The greater rigidity in this direction η causes a very small increase in the forces transmitted to the ground 12 due to the small amplitude of vibration of the base body 2 in this direction η. When the vibrating conveyor 1 is designed so that the angle β is 27°, the difference in rigidity of the basic suspension 2 in the two perpendicular directions η and 2, is twice as great, i.e. advantageously the rigidity in the direction η is twice as great as the rigidity in the direction ξ.

The vibrating conveyor 1 comprises at least one and preferably four (otherwise many) resilient buffers 9. The resilient buffers 9 are fixed to one of the base body 2 and the trough 5. The resilient buffers 9 are not fixed to the other of the base body 2 and the trough 5, i.e. between the resilient buffers 9 and the other of the base body 2 and the trough 5 there is a gap/space 10 extending in the direction ξ. The resilient buffers 9 can be attached to one of the base body 2 and the trough 5 by means of additional brackets 11 or can be attached to them directly, i.e. without any intermediate elements. Fig. 1 shows an embodiment of a vibrating conveyor 1 in which the resilient buffers 9 are fixed to the base body 2 by means of a support 11, and there are gaps 10 between the resilient buffers 9 and the trough 5 (or rather the support 11 fixed on the trough 5).

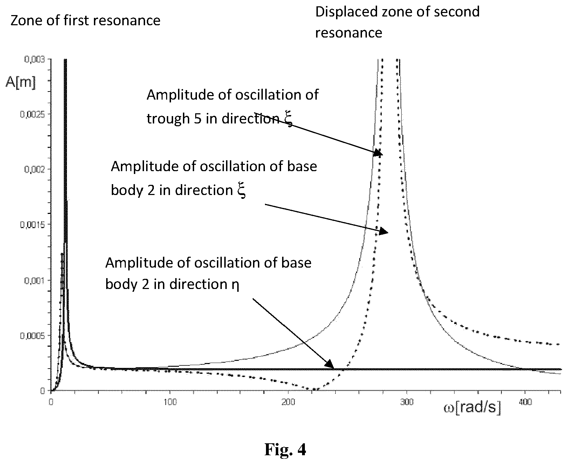

The purpose of the resilient buffers 9 and gaps 10 is as follows. At a correctly determined operating point of the vibrating conveyor 1 in the zone of the second resonance (see Fig. 2 - amplitude-frequency characteristics), the nominal rotational frequency ω_{η} of the vibration drive 3 and the nominal amplitude Aₙ of vibration of the trough 5 are such that the resilient buffers 9 attached to one of the base body 2 and the trough 5 move/vibrate with respect to the other of the base body 2 and the trough 5 in the direction ξ, i.e. we always have a gap 10. When, for some reason (e.g. a spontaneous change in the parameters of the suspension system 7 - e.g. by failure or damage of the suspension sub-assemblies 7a or when the forcing frequency of the vibration drive 3 is overdriven), the amplitude of vibration of the trough 5 in the direction 2, increases in an undesirable manner to such an extent that the resilient buffers 9 attached to one of the base body 2 and the trough 5 start to hit the other of the base body 2 and the trough 5. The characteristics of the system change as shown in Fig. 4, i.e. the zone of second resonance of the characteristics is shifted towards higher frequencies, which will force an automatic decrease in the amplitude of vibration of the trough 5 for the used nominal excitation frequency ωₙ, which in turn will result in that such amplitude will no longer cause the resilient buffers 9 attached to one of the base body 2 and the trough 5 to hit the other of the base body 2 and the trough 5. As we come to a situation in which the gap 10 is preserved again, the amplitude-frequency characteristic returns to its course from Fig. 2. If the reason for the undesired increase in the vibration amplitude of the trough 5 is not removed, after some time a situation will again arise in which the resilient buffers 9 start hitting the other of the base body 2 and the trough 5, the vibration amplitude decreases again, and so on. Nevertheless, this avoids an uncontrolled increase in the vibration amplitude of the trough 5, which greatly reduces possible damage to the vibrating conveyor 1 until a service technician intervenes and rectifies the fault.

## Claims

1. A vibrating conveyor (1) comprising:
a base body (2);
a vibration drive (3) mounted on the base body (2);
a trough (5) for conveying material (6), mounted on the base body (2) by means of a suspension system (7) comprising suspension sub-assemblies (7a); and
a basic suspension (8) for mounting the vibrating conveyor on the ground (12) and connected to the base body (2);
**characterised by**
the vibrating conveyor (1) defines the direction η, which is parallel to the direction of extension of the suspension sub-assemblies (7a) between the base body (2) and the trough (5), and the direction ξ, which is the direction of the main operating vibrations of the trough (5) and which is perpendicular to the direction η;
the vibrating conveyor (1) includes at least one resilient buffer (9) attached to one of the base body (2) and the trough (5), where between the at least one resilient buffer (9) and the other of the base body (2) and the trough (5) there is a gap (10) extending in the direction ξ,
and the rigidity of the basic suspension (8) in the direction η is greater than the rigidity of the basic suspension (8) in the direction ξ.

2. The vibrating conveyor (1) according to claim 1, **characterised in that** at least one resilient buffer (9) is attached to the base body (2), and a gap (10) is present between the at least one resilient buffer (9) and the trough (5).

3. The vibrating conveyor (1) according to claim 1 or 2, **characterised in that** it comprises four resilient buffers (9).

4. The vibrating conveyor (1) according to any one of claims 1 to 3, **characterised in that** the vibration drive (3) comprises one of an electrofibrator and an electromagnetic exciter, and the vibrating conveyor (1) further comprises a control system (4) for controlling the operation of the vibration drive (3), connected to the vibration drive (3) and comprising an inverter.

5. The vibrating conveyor (1) according to any one of claims 1-4, **characterised in that** the trough (5) comprises a conveying surface (13) along which the conveyed material (6) is moved, the angle (β) between the conveying surface (13) and the direction 2, being 27°-30°.

6. The vibrating conveyor (1) according to claim 5, **characterised in that** the angle (β) is 27°, and the rigidity of the basic suspension (8) in the direction η is twice as high as the rigidity of the basic suspension (8) in the direction ξ.
